# EUROPEAN PATENT APPLICATION

(11) **EP 3 299 166 A1**
(43) Date of publication of application: **28.03.2018**
(21) Application number: 16796467.5
(22) Date of filing: 16.05.2016
(51) Int. Cl.: B32B 27/34, B05D 5/00, B05D 7/24, B32B 9/00

(54) **GAS BARRIER LAMINATE**

(30) Priority: 18.05.2015 JP 2015101341
(71) Applicant: Mitsui Chemicals Tohcello, Inc., Tokyo 101-8485 (JP)
(72) Inventor: SUZUKI Shingo, Koga-shi Ibaraki 306-0213 (JP); MATOBA Daisuke, Koga-shi Ibaraki 306-0213 (JP); KIDOKORO Masako, Koga-shi Ibaraki 306-0213 (JP); NOMOTO Akira, Koga-shi Ibaraki 306-0213 (JP)
(74) Representative: Hoffmann Eitle
(86) International application number: PCT/JP2016/064463
(87) International publication number: WO 2016/186074

(57) **Abstract**

The gas barrier laminate (100) of the present invention includes a base material layer (101), and a gas barrier polymer layer (103) having a thickness of from 0.01 µm to 0.45 µm provided over at least one surface of the base material layer (101) and formed by heating a mixture including a polycarboxylic acid and a polyamine compound.

## Description

### TECHNICAL FIELD

The present invention relates to a gas barrier laminate.

### BACKGROUND ART

In general, as a gas barrier material, a laminate which is provided with an inorganic material layer as a gas barrier layer on a base material layer is used.

However, this inorganic material layer is weak against friction and the like, and in such a gas barrier laminate, cracks are formed in the inorganic material layer due to rubbing or elongation at the time of post-processing printing, laminating, or content filling, and the gas barrier property may decrease.

Therefore, as a gas barrier material, laminates using an organic material layer as a gas barrier layer are also used.

As a gas barrier material using an organic material layer as the gas barrier layer, a laminate which is provided with a gas barrier layer formed of a mixture including a polycarboxylic acid and a polyamine compound is known.

Examples of techniques related to such a gas barrier laminate include those described in Patent Document 1 (Japanese Unexamined patent publication No. 2005-225940) and Patent Document 2 (Japanese Unexamined patent publication No. 2014-184678).

Patent Document 1 discloses a gas barrier film having a gas barrier layer film-formed from a polycarboxylic acid and a polyamine and/or a polyol and having a polycarboxylic acid cross-linking degree of 40% or more.

Patent Document 2 discloses a gas barrier film formed on at least one side of a base material formed of a plastic film from a mixture prepared by mixing polyamine/polycarboxylic acid so as to be present in an amount of 12.5/87.5 to 27.5/72.5 and such that (polyamine+polycarboxylic acid) /flaky inorganic substances is 100/5 to 50.

### RELATED DOCUMENT

### PATENT DOCUMENT

[Patent Document 1] Japanese Unexamined patent publication No. 2005-225940
[Patent Document 2] Japanese Unexamined patent publication No. 2014-184678

### SUMMARY OF THE INVENTION

### TECHNICAL PROBLEM

According to an investigation by the present inventors, although the laminated film as described in Patent Documents 1 and 2 has excellent gas barrier properties due to the amide cross-linked structure formed by the polyamine compound and the polycarboxylic acid, it is clear that the ability of the film to conform to external deformation is not sufficient. Therefore, the applications thereof may have to be limited in order for the performance of gas barrier property to be exhibited.

The present invention has been made in view of the above circumstances, and it is an object of the present invention to provide a gas barrier laminate excellent in adhesion between layers of a base material layer and a gas barrier polymer layer having an amide cross-linked structure while being excellent in gas barrier performance.

### SOLUTION TO PROBLEM

According to the present invention, the gas barrier laminate shown below is provided.
[1] A gas barrier laminate including a base material layer; and a gas barrier polymer layer having a thickness of from 0.01 µm to 0.45 µm provided over at least one surface of the base material layer and formed by heating a mixture including a polycarboxylic acid and a polyamine compound.
[2] The gas barrier laminate according to [1], further including an undercoat layer between the base material layer and the gas barrier polymer layer, in which the undercoat layer is formed of one type or two or more types selected from a polyurethane-based resin, a polyester-based resin, an oxazoline-based resin, and an acrylic-based resin.
[3] The gas barrier laminate according to [1] or [2], further including an inorganic material layer between the base material layer and the gas barrier polymer layer.
[4] The gas barrier laminate according to [3], in which the inorganic material layer is formed of one type or two or more types of inorganic materials selected from the group consisting of silicon oxide, aluminum oxide, and aluminum.
[5] The gas barrier laminate according to [4], in which the inorganic material layer is an aluminum oxide layer formed of aluminum oxide.
[6] The gas barrier laminate according to [5], in which, when a Kα ray intensity of aluminum obtained by fluorescent X-ray analysis of the aluminum oxide layer is defined as A, and a Kα ray intensity of aluminum obtained by fluorescent X-ray analysis of an aluminum layer formed of aluminum and obtained under the same manufacturing conditions as the aluminum oxide layer except that oxygen is not introduced is defined as B, A/B is equal to or more than 0.50 and equal to or less than 0.75.
[7] The gas barrier laminate according to any one of [1] to [6], in which (the number of moles of -COO- groups included in the polycarboxylic acid in the mixture)/(the number of moles of amino groups included in the polyamine compound in the mixture) is more than 100/22 and 100/99 or less.
[8] The gas barrier laminate according to any one of [1] to [7], in which the polycarboxylic acid is one type or two or more types of polymers selected from polyacrylic acid, polymethacrylic acid, and a copolymer of acrylic acid and methacrylic acid.
[9] The gas barrier laminate according to any one of [1] to [8], in which, in an infrared absorption spectrum of the gas barrier polymer layer, when a total peak area in a range of an absorption band of equal to or more than 1493 cm⁻¹ and equal to or less than 1780 cm⁻¹ is A, and a total peak area in a range of an absorption band of equal to or more than 1598 cm⁻¹ and equal to or less than 1690 cm⁻¹ is B, an area ratio of an amide bond indicated by B/A is 0.370 or more.
[10] The gas barrier laminate according to [9], in which, in the infrared absorption spectrum, when a total peak area in a range of an absorption band of equal to or more than 1690 cm⁻¹ and equal to or less than 1780 cm⁻¹ is C, an area ratio of a carboxylic acid indicated by C/A is 0.500 or less.
[11] The gas barrier laminate according to [9] or [10], in which, in the infrared absorption spectrum, when a total peak area in a range of an absorption band of equal to or more than 1493 cm⁻¹ and equal to or less than 1598 cm⁻¹ is D, an area ratio of a carboxylate indicated by D/A is 0.450 or less.

### ADVANTAGEOUS EFFECTS OF INVENTION

According to the present invention, it is possible to provide a gas barrier laminate excellent in adhesion between layers of a base material layer and a gas barrier polymer layer having an amide cross-linked structure while being excellent in gas barrier performance.

### BRIEF DESCRIPTION OF THE DRAWINGS

The above objects and other objects, features and advantages will become more apparent from the following description of the preferable embodiments and the accompanying drawings.

FIG. 1 is a cross-sectional view schematically showing an example of a structure of a gas barrier laminate of an embodiment according to the present invention.
FIG. 2 is a cross-sectional view schematically showing an example of a structure of a gas barrier laminate of an embodiment according to the present invention.

### DESCRIPTION OF EMBODIMENTS

Description will be given below of embodiments of the present invention with reference to the drawings. Note that, the figures are schematic views and do not match the actual size ratio. Note that, "to" between numbers in the sentences means "equal to or more than first number and equal to or less than second number" unless otherwise noted.

### <Gas Barrier Laminate>

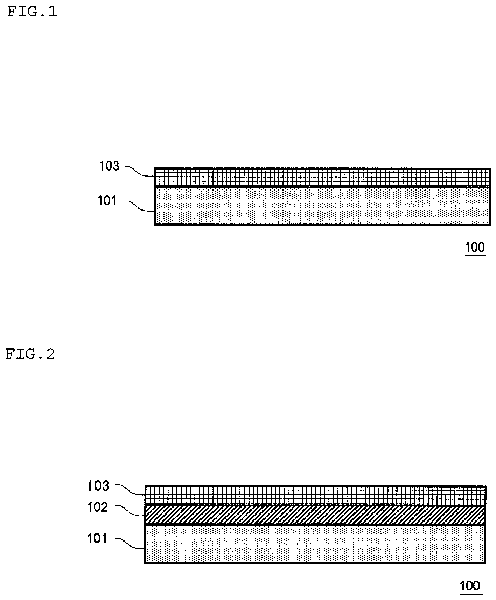

FIG. 1 and FIG. 2 are cross-sectional views schematically showing an example of a structure of a gas barrier laminate 100 according to an embodiment of the present invention.

The gas barrier laminate 100 is provided with a base material layer 101, a gas barrier polymer layer 103 having a thickness of from 0.01 µm to 0.45 µm provided over at least one surface of the base material layer 101 and formed by heating a mixture (also referred to below as a gas barrier coating material) including a polycarboxylic acid and a polyamine compound. Here, the layer formed by heating a mixture including a polycarboxylic acid and a polyamine compound means a layer formed of an amide cross-linked product of a mixture including a polycarboxylic acid and a polyamine compound.

A description will be given below of each layer forming the gas barrier laminate 100.

### [Gas Barrier Polymer Layer]

The gas barrier polymer layer 103 according to the present embodiment is formed by heating and curing a mixture including a polycarboxylic acid and a polyamine compound. From the viewpoint of the gas barrier properties and stable adhesion to the base material layer 101, the gas barrier polymer layer 103 has a thickness of from 0.01 µm to 0.45 µm. When the thickness of the gas barrier polymer layer 103 is less than 0.01 µm, the gas barrier property may be insufficient and when the thickness exceeds 0.45 µm, the ability to conform to an external deforming force becomes insufficient, and it may not be possible to obtain stable adhesion to the base material layer. That is, setting the thickness of the gas barrier polymer layer 103 in the above range makes it possible to impart conformability to the gas barrier polymer layer 103, and as a result, even when external deformation is applied to the gas barrier laminate 100, peeling does not easily occur between the gas barrier polymer layer 103 and the base material layer 101.

In addition, in the infrared absorption spectrum of the gas barrier polymer layer 103 according to the present embodiment, when a total peak area in a range of an absorption band of equal to or more than 1493 cm⁻¹ and equal to or less than 1780 cm⁻¹ is A, and a total peak area in a range of an absorption band of equal to or more than 1598 cm⁻¹ and equal to or less than 1690 cm⁻¹ is B, an area ratio of an amide bond indicated by B/A is preferably 0.370 or more, more preferably 0.400 or more, even more preferably 0.420 or more, and particularly preferably 0.430 or more, from the viewpoint of the gas barrier property. In addition, from the viewpoint of further improving the balance between appearance, dimensional stability, and productivity, the upper limit of the area ratio of the amide bond indicated by B/A is preferably 0.700 or less, more preferably 0.680 or less, and particularly preferably 0.650 or less.

Here, it is possible to obtain the gas barrier polymer layer 103 in which B/A described above is the lower limit value or more by heating a mixture including a polycarboxylic acid and a polyamine compound in a specific ratio (also referred to below as a gas barrier coating material) under specific heating conditions.

In the gas barrier polymer layer 103 according to the present embodiment, absorption based on vC=O of the unreacted carboxylic acid in the infrared absorption spectrum is observed in the vicinity of 1700 cm⁻¹ and absorption based on vC=O of the amide bond which is a cross-linked structure is observed in the vicinity of 1630 to 1685 cm⁻¹, and absorption based on vC=O of the carboxylate is observed in the vicinity of 1540 to 1560 cm⁻¹.

That is, in the present embodiment, it is considered that the total peak area A in the range of the absorption band of equal to or more than 1493 cm⁻¹ and equal to or less than 1780 cm⁻¹ in the infrared absorption spectrum represents an indicator of the total amount of the carboxylic acid, the amide bond, and the carboxylate, the total peak area B in the range of the absorption band of equal to or more than 1598 cm⁻¹ and equal to or less than 1690 cm⁻¹ represents an indicator of the amount of amide bonds present therein, the total peak area C in the range of the absorption band of equal to or more than 1690 cm⁻¹ and equal to or less than 1780 cm⁻¹ described below represents an indicator of the amount of the unreacted carboxylic acid present therein, the total peak area D in the range of an absorption band of equal to or more than 1493 cm⁻¹ and equal to or less than 1598 cm⁻¹ described below represents an indicator of the amount of the carboxylate present therein, that is, the ionic cross-linking of the carboxyl group and the amino group.

Note that, in the present embodiment, it is possible to measure the total peak areas A to D by the following procedure. First, a 1 cm × 3 cm measurement sample is cut out from the gas barrier polymer layer 103 of the present embodiment. Next, the infrared absorption spectrum of the surface of the gas barrier polymer layer 103 is obtained by infrared total reflection measurement (ATR method) . From the obtained infrared absorption spectrum, the total peak areas A to D described above are calculated by the following procedures (1) to (4).
(1) Connect the absorbance at 1780 cm⁻¹ and 1493 cm⁻¹ by a straight line (N) and let the area surrounded by the absorption spectrum in the range of an absorption band of equal to or more than 1493 cm⁻¹ and equal to or less than 1780 cm⁻¹ and the straight line N be the total peak area A.
(2) Draw a straight line (O) vertically downward from an absorbance (Q) at 1690 cm⁻¹, let P be the intersection of N and O, draw a straight line (S) vertically downward from an absorbance (R) at 1598 cm⁻¹, let T be the intersection of N and S, and let the area surrounded by the absorption spectrum in the range of an absorption band of equal to or more than 1598 cm⁻¹ and equal to or less than 1690 cm⁻¹, the straight line S, the point T, the straight line N, the point P, the straight line O, the absorbance Q, and the absorbance R be the total peak area B.
(3) Let the area surrounded by the absorption spectrum in the range of an absorption band of equal to or more than 1690 cm⁻¹ and equal to or less than 1780 cm⁻¹, the absorbance Q, the straight line O, the point P, and the straight line N be the total peak area C.
(4) Let the area surrounded by the absorption spectrum in the range of an absorption band of equal to or more than 1493 cm⁻¹ and equal to or less than 1598 cm⁻¹, the absorbance R, the straight line S, the point T, and the straight line N be the total peak area D.

Next, area ratios B/A, C/A, and D/A are obtained from the areas obtained by the above method.

Note that, it is possible for the measurement of the infrared absorption spectrum (infrared total reflection measurement: ATR method) of the present embodiment to be carried out, for example, using an IRT-5200 apparatus manufactured by JASCO Corporation, mounted with PKM-GE-S (Germanium) crystals, under conditions of an incident angle of 45°, room temperature, a resolution of 4 cm⁻¹, and an integration number of 100 times.

In the gas barrier polymer layer 103 formed by a mixture including a polycarboxylic acid and a polyamine compound, there are two types of cross-linked structures, ionic cross-linking and amide cross-linking, and the occurrence ratio of these cross-linked structures is important from the viewpoint of improving the gas barrier performance. Note that, the ionic cross-linking described above is generated by the acid-base reaction of the carboxyl group included in the polycarboxylic acid and the amino group included in the polyamine compound, and the amide cross-linking described above is generated by a dehydration condensation reaction of the carboxyl group included in the polycarboxylic acid and the amino group included in the polyamine compound.

Accordingly, as a design guideline for improving the performance balance of the appearance, dimensional stability, and productivity while improving the gas barrier performances such as the oxygen barrier property and the water vapor barrier property under conditions of both high humidity and after a boil and retort treatment, it is possible to apply the scale, that is, the area ratio of the amide bond indicated by B/A described above. Controlling the manufacturing conditions makes it possible to adjust the area ratio of the amide bond indicated by B/A described above of the gas barrier polymer layer 103 to a specific value or more, and the gas barrier polymer layer 103 having such a characteristic more effectively exhibits a gas barrier property under conditions of both high humidity and after a boil and retort treatment, and is also excellent in the balance between appearance, dimensional stability, and productivity.

That is, using the gas barrier polymer layer 103 having an amide bond area ratio indicated by B/A of the above lower limit value or more makes it possible to obtain the gas barrier laminate 100 excellent in the balance between appearance, dimensional stability, and productivity while being superior in the oxygen barrier property and the water vapor barrier property under conditions of both high humidity and after a boil and retort treatment.

Although the reason why the gas barrier polymer layer 103 is excellent in the performance balance described above is not necessarily clear, it is considered that this is because the gas barrier polymer layer having the area ratio of the amide bond indicated by B/A in the above range is formed of a dense structure where the two types of cross-linked structures of the ionic cross-linking and amide cross-linking are well-balanced.

That is, it is considered that the fact that the area ratio of the amide bond indicated by B/A is within the above range means that the two types of cross-linked structures of the ionic cross-linking and amide cross-linking are formed in a well-balanced manner.

For the gas barrier polymer layer 103 according to the present embodiment, in the infrared absorption spectrum, when a total peak area in a range of an absorption band of equal to or more than 1690 cm⁻¹ and equal to or less than 1780 cm⁻¹ is C, an area ratio of a carboxylic acid indicated by C/A is preferably 0.040 or more, more preferably 0.060 or more, and particularly preferably 0.080 or more from the viewpoint of further improving the balance between appearance, dimensional stability, and productivity.

In addition, from the viewpoint of further improving the oxygen barrier property and the water vapor barrier property under conditions of both high humidity and after a boil and retort treatment, the upper limit of the area ratio of the carboxylic acid indicated by C/A is, preferably 0.500 or less, more preferably 0.450 or less, and particularly preferably 0.400 or less.

For the gas barrier polymer layer 103 according to the present embodiment, in the infrared absorption spectrum, when a total peak area in a range of an absorption band of equal to or more than 1493 cm⁻¹ and equal to or less than 1598 cm⁻¹ is D, an area ratio of carboxylate indicated by D/A is preferably 0.100 or more and more preferably 0.150 or more from the viewpoint of further improving the oxygen barrier property and the water vapor barrier property under conditions of both high humidity and after a boil and retort treatment.

In addition, from the viewpoint of further improving the balance between appearance, dimensional stability, and productivity, the upper limit of the area ratio of the carboxylate indicated by D/A is preferably 0.450 or less, more preferably 0.420 or less, and particularly preferably 0.400 or less.

It is possible to control the area ratio of the amide bond indicated by B/A, the area ratio of carboxylic acid indicated by C/A, and the area ratio of carboxylate indicated by D/A of the gas barrier polymer layer 103 according to the present embodiment by appropriately adjusting the manufacturing conditions of the gas barrier polymer layer 103.

In the present embodiment, in particular, the blending ratio of the polycarboxylic acid and the polyamine compound, the method of preparing the gas barrier coating material, the method, temperature, time, and the like of the heat treatment of the gas barrier coating material are examples of factors for controlling the area ratio of the amide bond indicated by B/A, the area ratio of the carboxylic acid indicated by C/A, and the area ratio of the carboxylate indicated by D/A.

In order to obtain the gas barrier polymer layer 103 where B/A described above is the lower limit value or more, it is important to tightly control the manufacturing conditions such as the blending ratio of the polycarboxylic acid and the polyamine compound, the method of preparing the gas barrier coating material, and the method, temperature, time, and the like of the heat treatment of the gas barrier coating material. That is, it is possible to obtain the gas barrier polymer layer 103 where B/A described above is the lower limit value or more for the first time by a manufacturing method tightly controlling various factors relating to the following three conditions.
(1) Blending ratio of polycarboxylic acid and polyamine compound
(2) Method for preparing gas barrier coating material
(3) Method, temperature, and time of heat treatment of gas barrier coating material

Description will be given below of an example of the method for manufacturing the gas barrier polymer layer 103 according to the present embodiment.

First, description will be given of (1) the blending ratio of the polycarboxylic acid and polyamine compound.

### (Blending Ratio of Polycarboxylic Acid and Polyamine Compound)

In the present embodiment, (the number of moles of -COO- groups included in the polycarboxylic acid in the gas barrier coating material)/(the number of moles of amino groups included in the polyamine compound in the gas barrier coating material) is preferably more than 100/22, more preferably 100/25 or more, and particularly preferably 100/29 or more.

On the other hand, in the present embodiment, (the number of moles of -COO- groups included in the polycarboxylic acid in the gas barrier coating material)/(the number of moles of amino groups included in the polyamine compound in the gas barrier coating material) is preferably 100/99 or less, more preferably 100/86 or less, and particularly preferably 100/75 or less.

In order to obtain the gas barrier polymer layer 103 according to the present embodiment, it is preferable to adjust the blending ratio of the polycarboxylic acid and the polyamine compound in the gas barrier coating material such that (the number of moles of -COO-groups included in the polycarboxylic acid in the gas barrier coating material)/(the number of moles of amino groups included in the polyamine compound in the gas barrier coating material) is in the above ranges.

### (Polycarboxylic Acid)

The polycarboxylic acid according to the present embodiment has two or more carboxy groups in the molecule. Specifically, examples thereof include homopolymers of α, β-unsaturated carboxylic acid such as acrylic acid, methacrylic acid, itaconic acid, fumaric acid, crotonic acid, cinnamic acid, 3-hexenoic acid, and 3-hexenedioic acid, or copolymers thereof. In addition, the polycarboxylic acid may be a copolymer of the α,β-unsaturated carboxylic acid described above and esters such as ethyl ester, olefins such as ethylene, or the like.

Among these, a homopolymer of acrylic acid, methacrylic acid, itaconic acid, fumaric acid, crotonic acid, and cinnamic acid or a copolymer thereof is preferable, one type or two or more types of polymers selected from polyacrylic acid, polymethacrylic acid, and a copolymer of acrylic acid and methacrylic acid is more preferable, at least one type of polymer selected from polyacrylic acid and polymethacrylic acid is even more preferable, and at least one type of polymer selected from a homopolymer of acrylic acid or a homopolymer of methacrylic acid is particularly preferable.

Here, in the present embodiment, polyacrylic acid includes both homopolymers of acrylic acid and copolymers of acrylic acid and another monomer. In a case of a copolymer of acrylic acid and another monomer, the polyacrylic acid generally includes constituent units which are derived from acrylic acid at 90% by mass or more, preferably 95% by mass or more, and more preferably 99% by mass or more in 100% by mass of the polymer.

In addition, in the present embodiment, polymethacrylic acid includes both homopolymers of methacrylic acid and copolymers of methacrylic acid and another monomer. In a case of a copolymer of methacrylic acid and another monomer, the polymethacrylic acid generally includes constituent units which are derived from methacrylic acid at 90% by mass or more, preferably 95% by mass or more, and more preferably 99% by mass or more in 100% by mass of polymer.

The polycarboxylic acid according to the present embodiment is a polymer where carboxylic acid monomers are polymerized and the molecular weight of the polycarboxylic acid is preferably 500 to 2,000,000, and more preferably 1,500 to 1,000,000, from the viewpoint of excellent balance of gas barrier property and handleability. The molecular weight of the polycarboxylic acid is even more preferably 5,000 to 500,000, and particularly preferably 10,000 to 100,000.

Here, in the present embodiment, the molecular weight of the polycarboxylic acid is the polyethylene oxide conversion weight average molecular weight and is measurable using gel permeation chromatography (GPC).

### (Polyamine Compound)

The polyamine compound according to the present embodiment is a polymer having two or more amino groups in the main chain, side chain or terminal. Specific examples thereof include aliphatic polyamines such as polyallylamine, polyvinylamine, polyethyleneimine, and poly(trimethyleneimine); polyamides having amino groups on side chains such as polylysine and polyarginine; and the like. In addition, a polyamine where a portion of the amino group is modified may be used. From the viewpoint of obtaining favorable gas barrier properties, polyethylene imine is more preferable.

From the viewpoint of excellent balance of gas barrier property and handleability, the weight average molecular weight of the polyamine compound according to the present embodiment is preferably 50 to 5,000,000, more preferably 100 to 2,000,000, even more preferably 1,500 to 1, 000, 000, still more preferably 1,500 to 500,000, and particularly preferably 1,500 to 100,000.

Here, in the present embodiment, it is possible to measure the molecular weight of the polyamine compound using a boiling point increasing method or a viscosity method.

Next, description will be given of (2) a method for preparing a gas barrier coating material.

For example, it is possible to manufacture a gas barrier coating material as follows.

First, the carboxy group of the polycarboxylic acid is completely or partially neutralized by adding a base to the polycarboxylic acid. Next, the polyamine compound is added to the polycarboxylic acid in which the carboxy groups are completely or partially neutralized. Mixing the polycarboxylic acid and the polyamine compound according to such a procedure makes it possible to suppress the generation of aggregates of the polycarboxylic acid and the polyamine compound, and to obtain a uniform gas barrier coating material. This makes it possible to more effectively advance the dehydration condensation reaction between the -COO- group included in the polycarboxylic acid and the amino group included in the polyamine compound.

It is possible to suppress gelation from occurring by neutralizing the polycarboxylic acid with the base according to the present embodiment when mixing a polyamine compound and polycarboxylic acid. Accordingly, in the polycarboxylic acid, from the viewpoint of prevention of gelation, a product in which the carboxy groups are partially neutralized or completely neutralized by a base is preferably used. It is possible to obtain the neutralized product by partially or completely neutralizing the carboxy group of polycarboxylic acid with a base (that is, the carboxy group of the polycarboxylic acid is partially or completely made into carboxylate) . Due to this, it is possible to prevent gelation when adding a polyamine compound.

A partially neutralized product is prepared by adding a base to an aqueous solution of polycarboxylic acid and it is possible to set a desired neutralization degree by adjusting the ratio of the amounts of the polycarboxylic acid and the base. In the present embodiment, from the viewpoint of sufficiently suppressing gelation caused by the neutralization reaction with an amino group of a polyamine compound, the neutralization degree of the polycarboxylic acid by the base is preferably 30 to 100 equivalent%, 40 to 100 equivalent%, and more preferably 50 to 100 equivalent%.

It is possible to use an arbitrary water-soluble base as a base. It is possible to use either or both of a volatile base and a non-volatile base as a water-soluble base; however, a volatile base which is easily removed when drying or curing is preferable from the viewpoint of suppressing a deterioration in the gas barrier property due to a residual free base.

Examples of volatile bases include ammonia, morpholine, alkylamine, 2-dimethyl amino ethanol, N-methyl monopholine, ethylene diamine, and tertiary amines such as triethyl amine, an aqueous solution thereof or a mixture thereof. From the viewpoint of obtaining a favorable gas barrier property, an ammonia aqueous solution is preferable.

Examples of non-volatile bases include sodium hydroxide, lithium hydroxide, and potassium hydroxide, an aqueous solution thereof, or a mixture thereof.

In addition, from the viewpoint of improving coatability, the solid content concentration of the gas barrier coating material is preferably set to 0.5% by mass to 15% by mass, and more preferably set to 1% by mass to 10% by mass.

In addition, for the gas barrier coating material, it is preferable to further add a surfactant from the viewpoint of preventing the occurrence of cissing during coating. The addition amount of the surfactant is preferably 0.01 to 3% by mass, and more preferably 0.01 to 1% by mass when the total solid content of the gas barrier coating material is 100% by mass.

Examples of the surfactant according to the present embodiment include an anionic surfactant, a non-ionic surfactant, a cationic surfactant, an amphoteric surfactant and the like, and, from the viewpoint of obtaining favorable coatability, non-ionic surfactants are preferable, and polyoxyethylene alkyl ethers are more preferable.

Examples of the non-ionic surfactants include polyoxyalkylene alkylaryl ethers, polyoxyalkylene alkyl ethers, polyoxyalkylene fatty acid esters, sorbitan fatty acid esters, silicone-based surfactants, acetylene alcohol-based surfactants, fluorine-containing surfactants, and the like.

Examples of the polyoxyalkylene alkyl aryl ethers include polyoxyethylene nonyl phenyl ether, polyoxyethylene octyl phenyl ether, polyoxyethylene dodecyl phenyl ether, and the like.

Examples of the polyoxyalkylene alkyl ethers include polyoxyethylene alkyl ethers such as polyoxyethylene oleyl ether and polyoxyethylene lauryl ether.

Examples of the polyoxyalkylene fatty acid esters include polyoxyethylene oleic acid esters, polyoxyethylene lauric acid esters, polyoxyethylene distearic acid esters, and the like.

Examples of sorbitan fatty acid esters include sorbitan laurate, sorbitan monostearate, sorbitan monooleate, sorbitan sesquioleate, polyoxyethylene monooleate, polyoxyethylene stearate, and the like.

Examples of silicone-based surfactants include dimethylpolysiloxane and the like.

Examples of the acetylene alcohol surfactant include 2,4,7,9-tetramethyl-5-decyne-4,7-diol, 3,6-dimethyl-4-octyne-3,6-diol, 3,5-dimethyl-1-hexyne-3-ol, and the like.

Examples of fluorine-containing surfactant include fluorine alkyl ester and the like.

The gas barrier coating material according to the present embodiment may include other additives within the range not impairing the object of the present invention. For example, various types of additive agents such as a lubricant, a slipping agent, an anti-blocking agent, an anti-static agent, an anti-fogging agent, a pigment, a dye, an inorganic or organic filler, and a polyvalent metal compound may be added.

Next, description will be given of (3) the method, temperature, and time of the heat treatment of the gas barrier coating material.

In order to obtain the gas barrier polymer layer 103 according to the present embodiment, it is preferable to adopt the method, temperature, and time of the heat treatment of the gas barrier coating material which are able to effectively advance the dehydration condensation reaction between the -COO- group contained in the polycarboxylic acid and the amino group contained in the polyamine compound. Specifically, it is important to tightly control and combine each factor such as the coating amount of the gas barrier coating material, the type of apparatus used for the heat treatment, the heat treatment temperature, and the heat treatment time. In order to manufacture the gas barrier polymer layer 103 according to the present embodiment, for example, the gas barrier coating material according to the present embodiment is coated on a base material layer 101 such that the wet thickness is 0.05 to 30 µm, and heated and dried using a known apparatus used for heat treatment.

The method of drying and heat treatment is not particularly limited as long as it is possible to achieve the object of the present invention and any method capable of curing the gas barrier coating material and heating the cured gas barrier coating material may be used. Examples thereof include heating by convection heat transfer such as ovens or dryers, heating by conductive heat transfer such as heating rolls, heating by radiation heat transfer using electromagnetic waves such as infrared, far infrared, and near infrared heaters, and heating by internal heat generation such as microwaves. As an apparatus used for drying and heat treatment, an apparatus capable of performing both drying and heat treatments is preferable from the viewpoint of production efficiency. In particular, from the viewpoint of being usable for various purposes such as drying, heating, annealing and the like, it is preferable to use a hot air oven, and from the viewpoint of excellent thermal conductivity efficiency to the film, it is preferable to use a heating roll. Further, methods used for the drying and heat treatments may be appropriately combined. A hot air oven and a heating roll may be used in combination, for example, if the gas barrier coating material is dried in a hot air oven and then subjected to a heat treatment with a heating roll, the heat treatment step duration becomes short, which is preferable from the viewpoint of production efficiency. In addition, it is preferable to perform the drying and heat treatment only with a hot air oven. In the case of drying the gas barrier coating material using a hot air oven, it is desirable to perform heat treatment under conditions where the heat treatment temperature is 160°C to 250°C and the heat treatment time is 1 second to 30 minutes, preferably where the heat treatment temperature is 180°C to 240°C and the heat treatment time is 5 seconds to 20 minutes, more preferably where the heat treatment temperature is 200°C to 230°C and the heat treatment time is 10 seconds to 15 minutes, and even more preferably where the heat treatment temperature is 200°C to 220°C and the heat treatment time is 15 seconds to 10 minutes. Furthermore, as described above, it is possible to perform the heat treatment in a short time by using a heating roll therewith. Note that, from the viewpoint of effectively advancing the dehydration condensation reaction between the -COO- group included in the polycarboxylic acid and the amino group included in the polyamine compound, it is important to adjust the heat treatment temperature and the heat treatment time according to the wet thickness of the gas barrier coating material.

The method of coating the gas barrier coating material according to the present embodiment on a base material is not particularly limited, and it is possible to use an ordinary method. Examples thereof include coating methods using various known coating devices such as a Mayer bar coater, an air knife coater, gravure coaters such as a direct gravure coater, a gravure offset, arc gravure coaters, gravure reverse type coaters, and jet nozzle type coaters, reverse roll coaters such as a top feed reverse coater, a bottom feed reverse coater, and a nozzle feed reverse coater, a five-roll coater, a lip coater, a bar coater, a bar reverse coater, a die coater, an applicator, and the like.

The coating amount (wet thickness) is preferably 0.05 to 30 µm, more preferably 1 to 20 µm, and even more preferably 1 to 10 µm.

When the coating amount is the above upper limit value or less, it is possible to suppress curling of the obtained gas barrier laminate 100. In addition, when the coating amount is the above upper limit value or less, it is possible to more effectively advance the dehydration condensation reaction between the -COO- group included in the polycarboxylic acid and the amino group included in the polyamine compound.

In addition, when the coating amount is the above lower limit value or more, it is possible to further improve the barrier performance of the obtained gas barrier laminate 100.

The thickness of the gas barrier polymer layer 103 after drying/curing is 0.01 pm to 0.45 µm, preferably 0.05 µm to 0.30 µm, more preferably 0.10 µm to 0.25 µm, and even more preferably 0.15 µm to 0.25 µm.

For the drying and heat treatment, a heat treatment may be carried out after drying, or drying and heat treatments may be carried out at the same time. The method of the drying and heat treatment is not particularly limited as long as it is a method able to achieve the object of the present invention; however, a method using an oven is preferable from the viewpoint of being usable for various purposes such as drying, heating, and annealing, and a method using a heating roll is particularly preferable from the viewpoint that the thermal conductivity efficiency to the film for the purpose of heating is excellent.

The gas barrier polymer layer 103 according to the present embodiment is formed from the gas barrier coating material described above and is obtained by coating the gas barrier coating material on the base material layer 101 or the inorganic material layer 102 described below and then performing drying and heat treatments and curing the gas barrier coating material.

The oxygen permeability of the gas barrier polymer layer 103 according to the present embodiment at 20°C and 90% RH at a thickness of 1 µm is preferably 30 ml/ (m²·day·MPa) or less, and more preferably 20 ml/(m²·day·MPa) or less. Due to this, it is possible to obtain a favorable gas barrier property.

Note that, the oxygen permeability is measured according to JIS K 7126 at a temperature of 20°C and a humidity of 90% RH.

### [Inorganic Material Layer]

As shown in FIG. 2, in the gas barrier laminate 100, the inorganic material layer 102 may be further laminated between the base material layer 101 and the gas barrier polymer layer 103. Due to this, it is possible to further improve the barrier performances such as the oxygen barrier property and water vapor barrier property.

According to the investigation by the present inventors, in a laminated film in which a gas barrier layer having an amide cross-linked structure is provided on an inorganic material layer such as aluminum oxide formed on a base material layer with an object of further improving the gas barrier property, the inorganic material layer and the gas barrier layer having an amide cross-linked structure firmly adhere to each other, but the gas barrier layer having an amide cross-linked structure has an insufficient ability to conform to external deformation, thus, it is clear that peeling tends to occur easily between the layers of the inorganic material layer and the base material layer when external deformation is applied to the laminated film.

In contrast, in the gas barrier laminate 100 of the present embodiment, even when the inorganic material layer 102 is further provided between the base material layer 101 and the gas barrier polymer layer 103, in addition to the excellent gas barrier performance, the adhesion between the layers of the inorganic material layer 102 and the gas barrier polymer layer 103 having an amide cross-linking property is also excellent. That is, even in a case where the gas barrier laminate 100 of the present embodiment is provided with the inorganic material layer 102, which is an aluminum oxide layer or the like for improving the gas barrier property, it is possible for the gas barrier polymer layer 103 to maintain a stable adhered state against external deformation to the gas barrier laminate 100.

Examples of the inorganic material forming the inorganic material layer 102 of the present embodiment include metals, metal oxides, metal nitrides, metal fluorides, metal oxynitrides, and the like which are able to form a thin film having barrier properties.

Examples of inorganic materials forming the inorganic material layer 102 include one type or two or more types selected from simple substances such as periodic table 2A elements such as beryllium, magnesium, calcium, strontium, and barium, periodic table transition elements such as titanium, zirconium, ruthenium, hafnium, and tantalum; periodic table 2B elements such as zinc; periodic table 3A elements such as aluminum, gallium, indium, and thallium; periodic table 4A elements such as silicon, germanium, and tin; periodic table 6A elements such as selenium and tellurium; and oxides, nitrides, fluorides, oxynitrides, and the like.

Note that, in the present embodiment, the group name of the periodic table is indicated by the old CAS formula.

Furthermore, among the inorganic materials described above, one type or two or more types of inorganic materials selected from the group consisting of silicon oxide, aluminum oxide, and aluminum are preferable, due to being excellent in the balance of barrier properties, cost, and the like.

Note that, silicon oxide may contain silicon monoxide and silicon suboxide in addition to silicon dioxide.

The inorganic material layer 102 is formed of the inorganic material described above. The inorganic material layer 102 may be formed of a single inorganic material layer or a plurality of inorganic material layers. In addition, in a case where the inorganic material layer 102 is formed of a plurality of inorganic material layers, the inorganic material layer 102 may be formed of the same type of inorganic material layer or may be formed of different types of inorganic material layers.

In addition, in a case where the inorganic material layer 102 is an aluminum oxide layer formed of aluminum oxide, from the viewpoint of stable adhesion of the aluminum oxide layer, when the Kα ray intensity of aluminum obtained by fluorescent X-ray analysis of the aluminum oxide layer is A (kcps) and the Kα ray intensity of the aluminum obtained by fluorescent X-ray analysis of the aluminum layer formed of aluminum and obtained under the same manufacturing conditions as the above aluminum oxide layer except that oxygen is not introduced is B (kcps), the attachment rate defined by A/B is preferably equal to or more than 0.50 and equal to or less than 0.75, more preferably equal to or more than 0.52 and equal to or less than 0.70, even more preferably equal to or more than 0.53 and equal to or less than 0.65, and most preferably equal to or more than 0.55 and equal to or less than 0.60. Setting the attachment rate within the above range makes it possible to obtain the gas barrier laminate 100 capable of maintaining the gas barrier polymer layer 103 in a more stable adhesion state against external deformation.

It is possible to obtain the Kα ray intensity A, for example, by the following method.

The Kα ray of aluminum forming the aluminum oxide layer is measured with respect to the aluminum oxide layer of the gas barrier laminate 100 of the present embodiment using a fluorescent X-ray analyzer ZSXPrimus II (manufactured by Rigaku Corporation), and it is possible to set the obtained fluorescence X-ray intensity as the Kα ray intensity A (kcps).

It is possible to obtain the Kα ray intensity B, for example, by the following method.

First, an aluminum layer formed of aluminum is formed on the base material layer under the same manufacturing conditions as the aluminum oxide layer in the gas barrier laminate 100 of the present embodiment without introducing oxygen. Next, using the fluorescent X-ray analyzer ZSX Primus II (manufactured by Rigaku Corporation), the Kα ray of aluminum forming the aluminum layer was measured with respect to the obtained aluminum layer, and it is possible to set the obtained fluorescent X-ray intensity as B (kcps).

Here, the Kα ray intensity A of the obtained aluminum oxide layer depends on the amount of oxygen introduced, and when the amount of oxygen introduced (degree of oxidation) increases, the vapor deposition amount as aluminum decreases, thus the Kα ray intensity A is reduced, and when the amount of oxygen introduced is small, the vapor deposition amount as aluminum increases, thus the Kα ray intensity A increases.

In addition, in a case where the inorganic material layer 102 is a metal oxide layer formed of a metal oxide in the gas barrier laminate 100 of the present embodiment, when the Kα ray intensity of the metal forming the metal oxide obtained by fluorescent X-ray analysis of the metal oxide layer is C (kcps), and the Kα ray intensity of the metal formed of the metal forming the metal oxide and obtained by fluorescent X-ray analysis of the metal layer obtained under the same manufacturing conditions as the metal oxide layer except that oxygen is not introduced is D (kcps), the attachment rate defined by C/D is preferably equal to or more than 0.50 and equal to or less than 0.90, and more preferably equal to or more than 0.55 and equal to or less than 0.80. When the attachment rate is in the above range, it is possible to obtain the gas barrier laminate 100 excellent in balance between gas barrier property and transparency.

Here, it is possible to measure the Kα ray intensities C and D by the same method as the Kα ray intensities A and B.

From the viewpoint of balance of barrier property, adhesiveness, and handleability, the thickness of the inorganic material layer 102 is usually 1 nm or more and 1000 nm or less, preferably 1 nm or more and 500 nm or less, more preferably 1 nm or more and 100 nm or less, even more preferably 1 nm or more and 50 nm or less, and particularly preferably 1 nm or more and 20 nm or less.

In the present embodiment, it is possible to obtain the thickness of the inorganic material layer 102 from observation images by a transmission electron microscope or a scanning electron microscope.

The method of forming the inorganic material layer 102 is not particularly limited, and it is possible to form the inorganic material layer 102 on one surface or both surfaces of the base material layer 101 using, for example, a vacuum deposition method, an ion plating method, a sputtering method, a chemical vapor deposition method, a physical vapor deposition method, a chemical vapor deposition method (CVD), a plasma CVD method, a sol-gel method, or the like. Among the above, film formation under reduced pressure such as a sputtering method, an ion plating method, a chemical vapor deposition method (CVD), a physical vapor deposition method (PVD), a plasma CVD method, or the like is desirable. Due to this, it is expected quickly reacting the chemically active molecular species containing silicon such as silicon nitride or silicon oxynitride will make it possible to improve the smoothness of the surface of the inorganic material layer 102 and to reduce the number of pores.

In order to rapidly perform these bonding reactions, it is desirable that the inorganic atoms and compounds are chemically active molecular species or atomic species.

### [Base Material Layer]

The base material layer 101 of the present embodiment is formed of, for example, an organic material such as a thermosetting resin, a thermoplastic resin, or paper, and preferably includes at least one selected from a thermosetting resin and a thermoplastic resin.

Examples of thermosetting resins include known thermosetting resins such as an epoxy resin, an unsaturated polyester resin, a phenol resin, a urea melamine resin, a polyurethane resin, a silicone resin, and polyimide.

Examples of thermoplastic resins include thermoplastic resins known in the art such as polyolefin (polyethylene, polypropylene, poly(4-methyl-1-pentene), poly(1-butene), and the like), polyester (polyethylene terephthalate, polybutylene terephthalate, polyethylene naphthalate, and the like), polyamide (nylon-6, nylon-66, polymetaxylene adipamide, and the like), polyvinyl chloride, polyimide, ethylene vinyl acetate copolymers or saponified products thereof, polyvinyl alcohol, polyacrylonitrile, polycarbonate, polystyrene, ionomers, fluorine resins, mixtures thereof, and the like.

Among the above, from the viewpoint of improving transparency, one type or two or more types selected from polypropylene, polyethylene terephthalate, polybutylene terephthalate, polyethylene naphthalate, polyamide, and polyimide are preferable, and one type or two or more types selected from polyethylene terephthalate and polyethylene naphthalate is more preferable.

In addition, the base material layer 101 formed of a thermoplastic resin may be a single layer or two or more types of layers depending on the use of the gas barrier laminate 100.

In addition, the film formed from the thermosetting resin and the thermoplastic resin may be stretched in at least one direction, preferably a biaxial direction, to obtain a base material layer.

From the viewpoint of excellent transparency, rigidity and heat resistance, the base material layer 101 of the present embodiment is preferably a biaxially stretched film formed of one type or two or more types of thermoplastic resin selected from polypropylene, polyethylene terephthalate, polybutylene terephthalate, polyethylene naphthalate, polyamide, and polyimide, and more preferably a biaxially stretched film formed of one type or two or more types of thermoplastic resins selected from polyethylene terephthalate and polyethylene naphthalate.

In addition, the surface of the base material layer 101 may be coated with polyvinylidene chloride, polyvinyl alcohol, an ethylene and vinyl alcohol copolymer, an acryl resin, a urethane-based resin, and the like. Furthermore, the base material layer 101 may be subjected to a surface treatment in order to improve the adhesion with the gas barrier polymer layer 103. In detail, a surface activation treatment such as a corona treatment, a flame treatment, a plasma treatment, a primer coat treatment, or the like may be performed.

The thickness of the base material layer 101 is preferably 1 to 1000 µm, more preferably 1 to 500 µm, and even more preferably 1 to 300 µm, from the viewpoint of obtaining favorable film properties.

The shape of the base material layer 101 is not particularly limited, but examples thereof include a sheet or film shape, and shapes such as a tray, a cup, and a hollow body.

### (Undercoat Layer)

In the gas barrier laminate 100, from the viewpoint of improving the adhesion between the base material layer 101 and the gas barrier polymer layer 103 or the inorganic material layer 102, an undercoat layer may be further laminated on the base material layer 101.

Providing an undercoat layer between the base material layer 101 and the gas barrier polymer layer 103 or the inorganic material layer 102 further improves the conformability of the gas barrier polymer layer 103 and makes it possible for the gas barrier polymer layer 103 in the gas barrier laminate 100 to maintain a more stable adhesion state even when external deformation is applied thereto.

The undercoat layer is preferably formed of one type or two or more types selected from, for example, a polyurethane-based resin, a polyester-based resin, an oxazoline-based resin, and an acrylic-based resin.

In addition, in a case where an oxazoline-based resin is used, the undercoat layer is preferably formed of an oxazoline-based resin composition including an oxazoline group-containing aqueous polymer (A), an aqueous acrylic-based resin (B), and an aqueous polyester-based resin (C).

The oxazoline-based resin composition is formed of, for example, an oxazoline group-containing aqueous polymer (A) having an oxazoline group content of 6.0 to 9.0 mmol/g, an aqueous acrylic-based resin (B) having a carboxyl group content of 0.5 to 3.5 mmol/g, and an aqueous polyester-based resin (C) having a carboxyl group content of 0.5 to 2.0 mmol/g.

In addition, the oxazoline-based resin composition contains, for example, 10% by mass to 55% by mass of the oxazoline group-containing aqueous polymer (A), 10% by mass to 80% by mass of the aqueous acrylic-based resin (B), and 10% by mass to 80% by mass of the aqueous polyester-based resin (C) (the total amount of the oxazoline group-containing aqueous polymer (A), the aqueous acrylic-based resin (B), and aqueous polyester-based resin (C) is 100% by mass).

In addition, in the oxazoline-based resin composition, a ratio of the number of moles of the oxazoline group to the number of moles of the carboxyl group (represented by the ratio (x/y)×100 [mol%] of the number of moles of the oxazoline group (x mmol) to the number of moles of the carboxyl group (y mmol)) is 150 to 420 mol%.

In the oxazoline-based resin composition, it is preferable to include an oxazoline group-containing aqueous polymer (A), an aqueous acrylic-based resin (B), and an aqueous polyester-based resin (C), and other polymer components may also be used in combination therewith as necessary.

In addition, the oxazoline group content of the oxazoline group-containing aqueous polymer (A) is preferably 6.0 to 9.0 mmol/g, more preferably 6.5 to 8.5 mmol/g, and even more preferably 7.0 to 8.0 mmol/g.

In addition, the blending ratio of the oxazoline group-containing aqueous polymer (A) is preferably 10% by mass to 55% by mass, more preferably 15% by mass to 50% by mass, even more preferably 18% by mass to 50% by mass, and particularly preferably 20% by mass to 45% by mass (the total amount of the oxazoline group-containing aqueous polymer (A), the aqueous acrylic-based resin (B), and the aqueous polyester-based resin (C) is 100% by mass) .

In a case where the oxazoline group content of the oxazoline group-containing aqueous polymer (A) is the lower limit value or more or a case where the blending ratio of the oxazoline group-containing aqueous polymer (A) is the lower limit value or more, the cross-linking with the oxazoline group is more preferable. On the other hand, in a case where the content of the oxazoline group of the oxazoline group-containing aqueous polymer (A) is the upper limit value or less or the blending ratio of the oxazoline group-containing aqueous polymer (A) is the upper limit value or less, unreacted oxazoline groups are reduced, and the hot water resistance and the solvent resistance are more preferable. Adjusting to such a range makes it possible to improve the stability of the gas barrier property of the gas barrier laminate 100 after hot water treatment.

For the aqueous acrylic-based resin (B), the carboxyl group content is preferably 0.5 to 3.5 mmol/g, more preferably 0.8 to 3.5 mmol/g, even more preferably 1.0 to 3.0 mmol/g, particularly preferably 1.5 to 3.0 mmol/g, and most preferably 2.0 to 3.0 mmol/g.

Adjusting the carboxyl group content to such a range makes it possible to ensure the adhesion stability of the gas barrier laminate 100 and maintain an excellent gas barrier property.

In addition, the blending ratio of the aqueous acrylic-based resin (B) is preferably 10% by mass to 80% by mass, more preferably 20% by mass to 80% by mass, even more preferably 10% by mass to 70% by mass, particularly preferably 10% by mass to 65% by mass, and most preferably 15% by mass to 65% by mass (the total amount of the oxazoline group-containing aqueous polymer (A), the aqueous acrylic-based resin (B), and the aqueous polyester-based resin (C) is 100% by mass) .

In a case where the blending ratio of the aqueous acrylic-based resin (B) is the lower limit value or more, the effects of water resistance and solvent resistance tend to be sufficiently exhibited, and in a case where the blending ratio of the aqueous acrylic-based resin (B) is the upper limit value or less, the adhesion stability of the gas barrier laminate 100 becomes more favorable.

Furthermore, the carboxyl group content of the aqueous polyester-based resin (C) is preferably 0.5 to 2.0 mmol/g, more preferably 0.7 to 1.8 mmol/g, even more preferably 0.8 to 1.6 mmol/g, particularly preferably 1.0 to 1.5 mol/g, and most preferably 1.0 to 1.4 mmol/g.

Adjusting to such a range makes it possible to ensure the adhesion stability of the gas barrier laminate 100 and maintain an excellent gas barrier property.

In addition, the blending ratio of the aqueous polyester-based resin (C) is preferably 10% by mass to 80% by mass, more preferably 10% by mass to 70% by mass, even more preferably 15% by mass to 70% by mass, and particularly preferably 15% by mass to 65% by mass (the total amount of the oxazoline group-containing aqueous polymer (A), the aqueous acrylic-based resin (B) and the aqueous polyester-based resin (C) is 100% by mass).

In a case where the blending ratio of the aqueous polyester-based resin (C) is the lower limit value or more, the adhesion stability of the gas barrier laminate 100 is further improved and in a case where the blending ratio of the aqueous polyester-based resin (C) is the upper limit value or less, the water resistance of the gas barrier laminate 100 is further improved.

Adjusting to such a range makes it possible to ensure the adhesion stability of the gas barrier laminate 100 and maintain an excellent gas barrier property.

The ratio of the number of moles of the oxazoline group and the number of moles of the carboxyl group in the oxazoline-based resin composition (represented by the ratio (x/y)×100 [mol%] of the number of moles of the oxazoline group (x mmol) to the number of moles of the carboxyl group (y mmol)) is preferably 100 to 420 mol%, more preferably 150 to 420 mol%, even more preferably 130 to 420 mol%, and particularly preferably 165 to 420 mol%.

### (Oxazoline Group-Containing Aqueous Polymer (A))

Examples of the oxazoline group-containing aqueous polymer (A) include an addition polymerizable oxazoline group-containing monomer alone or a polymer obtained by polymerization with other monomers. Examples of addition polymerizable oxazoline group-containing monomers include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-ethyl-2-oxazoline, and the like, and it is possible to use one type or a mixture of two or more types thereof. Among these, 2-isopropenyl-2-oxazoline is preferable.

In addition, the other monomer may be a monomer copolymerizable with the addition polymerizable oxazoline group-containing monomer, and examples thereof include acrylates or methacrylates such as alkyl acrylate, alkyl methacrylate (examples of alkyl groups include a methyl group, an ethyl group, an n-propyl group, an isopropyl group, an n-butyl group, an isobutyl group, and the like); unsaturated carboxylic acids such as acrylic acid, methacrylic acid, itaconic acid, maleic acid, fumaric acid, crotonic acid, styrenesulfonic acid, and salts thereof (sodium salt, potassium salt, ammonium salt, tertiary amine salts, and the like); unsaturated nitriles such as acrylonitrile and methacrylonitrile; unsaturated amides such as acrylamide, methacrylamide, N-alkyl acrylamide, N-alkyl methacrylamide, N,N-dialkyl acrylamide, and N,N-dialkyl methacrylate (examples of the alkyl group include a methyl group, an ethyl group, an n-propyl group, an isopropyl group, an n-butyl group, an isobutyl group, cyclohexyl group, and the like); vinyl esters such as vinyl acetate, vinyl propionate, vinyl esters obtained by adding polyalkylene oxide to the ester moiety of acrylic acid, and methacrylic acid; vinyl ethers such as methyl vinyl ether and ethyl vinyl ether; α-olefins such as ethylene and propylene; halogenated α,β-unsaturated monomers such as vinyl chloride, vinylidene chloride, vinyl fluoride, and the like; α,β-unsaturated aromatic monomers such as styrene and α-methylstyrene, and the like, and it is possible to use one type or two or more types of monomer.

### (Aqueous Acrylic-Based Resin (B))

The aqueous acrylic-based resin (B) is a resin containing alkyl acrylate and /or alkyl methacrylate as main components, specifically, a water-soluble or water-dispersible resin in which the content ratio of the alkyl acrylate and/or alkyl methacrylate component is usually 40 to 95 mol% and the content ratio of the vinyl monomer component which is copolymerizable and has a functional group is usually 5 to 60 mol%.

Examples of the functional group in the vinyl monomer include a carboxyl group, an acid anhydride group, a sulfonic acid group, or a salt thereof, an amide group or an alkylolated amide group, an amino group (including a substituted amino group), an alkylolated amino group or a salt thereof, a hydroxyl group, an epoxy group, and the like, and a carboxyl group, an acid anhydride group, an epoxy group, or the like is particularly preferable. Two or more types of these groups may be contained in the resin.

Setting the content of the alkyl acrylate and/or the alkyl methacrylate in the aqueous acrylic-based resin (B) to 40 mol% or more particularly improves the coatability, the strength of the coating film, and the blocking resistance. Then, introducing 95 mol% or less of alkyl acrylate and/or alkyl methacrylate and 5 mol% or more of a compound having a specific functional group as a copolymerization component into the aqueous acrylic-based resin facilitates water solubilization or water dispersion and makes it possible to stabilize the state over a long period of time. As a result, it is possible to improve the adhesion between the layer of the cured product and the base material layer, particularly with the polyester film layer, and to improve the strength, water resistance, chemical resistance, and the like of the layer of the cured product by a reaction in the layer of the cured product.

Examples of the alkyl group of the alkyl acrylate and alkyl methacrylate include a methyl group, an n-propyl group, an isopropyl group, an n-butyl group, an isobutyl group, a 2-ethylhexyl group, a lauryl group, a stearyl group, a cyclohexyl group, and the like. Examples of the compound having a carboxyl group, an acid anhydride, or the like include acrylic acid, methacrylic acid, itaconic acid, maleic acid, and the like, alkali metal salts, alkaline earth metal salts, and ammonium salts thereof, as well as anhydrides such as maleic anhydride, and the like. Examples of the compound having a sulfonic acid group or a salt thereof include vinylsulfonic acid, styrenesulfonic acid, metal salts such as sodium of these sulfonic acids, ammonium salts, and the like.

Examples of the compound having an amide group or an alkylolated amide group include acrylamide, methacrylamide, N-methylmethacrylamide, methylolated acrylamide, methylolated methacrylamide, and the like.

Examples of the compound having an amino group, an alkylolated amino group, or a salt thereof include diethylaminoethyl vinyl ether, 2-aminoethyl vinyl ether, 3-aminopropyl vinyl ether, 2-aminobutyl vinyl ether, dimethylaminoethyl methacrylate, and the like.

Examples of the compound having a hydroxyl group include β-hydroxyethyl acrylate, β-hydroxyethyl methacrylate, β-hydroxypropyl acrylate, β-hydroxypropyl methacrylate, β-hydroxyvinyl ether, 5-hydroxypentyl vinyl ether, 6-hydroxyhexyl vinyl ether, polyethylene glycol monoacrylate, polyethylene glycol monomethacrylate, polypropylene glycol monoacrylate, and the like. Examples of the compound having an epoxy group include glycidyl acrylate, glycidyl methacrylate, and the like.

Furthermore, examples of compounds which can be used in combination therewith include acrylonitrile, styrenes, butyl vinyl ether, mono- or dialkyl esters of maleic acid, mono- or dialkyl esters of fumaric acid, mono- or dialkyl esters of itaconic acid, vinyl acetate, vinylpyridine, vinylpyrrolidone, vinyl trimethoxysilane, and the like.

As the aqueous acrylic-based resin (B), any type of acrylic-based resin may be used, but an acrylic-based resin not including an emulsifier is preferably used. The reason is so that the water resistance of the oxazoline group-containing aqueous polymer (A) is not inhibited by the emulsifier.

Accordingly, the aqueous acrylic-based resin (B) may be a self-dispersing type aqueous acrylic-based resin synthesized using a reactive emulsifier, or an aqueous acrylic-based resin synthesized using a high molecular weight surfactant. The reason is so that the water resistance of the oxazoline group-containing aqueous polymer (A) is not inhibited by the reacted emulsifier or the high molecular weight surfactant.

The aqueous acrylic-based resin (B) prevents deterioration of water resistance and solvent resistance of the oxazoline group-containing aqueous polymer (A) . The deterioration prevention effect is thought to be due to the following reason. The coating film of the acrylic-based resin has the effect of preventing the oligomer from precipitating on the surface of the polyethylene terephthalate. Due to the effect of preventing the oligomer precipitation, moisture permeating the defect barrier layer formed by the oligomer mass is prevented from adversely influencing the layer to be coated, that is, the base material layer. Accordingly, it is considered that the aqueous acrylic-based resin makes it possible to sufficiently exhibit the water resistance and the solvent resistance of the oxazoline group-containing aqueous polymer (A).

### (Aqueous Polyester-Based Resin (C))

The aqueous polyester-based resin (C) is not particularly limited, but preferable examples thereof include an aqueous or water-dispersible saturated or unsaturated polyester which does not contain a low molecular weight hydrophilic dispersant or the like.

Examples of the dicarboxylic acid component of the saturated polyester include aromatic dicarboxylic acids such as terephthalic acid, isophthalic acid, and 2,5-naphthalene dicarboxylic acid, aliphatic dicarboxylic acids such as adipic acid, azelaic acid, and sebacic acid, oxycarboxylic acid such as oxybenzoic acid, and ester-forming derivatives thereof. Examples of the glycol component include aliphatic glycols such as ethylene glycol, 1,4-butanediol, diethylene glycol, and triethylene glycol, alicyclic glycols such as 1,4-cyclohexanedimethanol, aromatic diols such as p-xylene diol, poly (oxyalkylene) glycols such as polyethylene glycol, polypropylene glycol, and polytetramethylene glycol, and the like.

The saturated polyester has a linear structure, but it is also possible to use a branched polyester obtained using an ester-forming component having a valency of three or more. On the other hand, examples of the unsaturated polyester include those represented by (1) and (2) below.
(1) As is known from JP-B-45-2201, JP-B-44-7134, JP-A 48-78233, JP-A 50-58123, and the like, unsaturated polyesters having a copolymerizable unsaturated group in a resin skeleton obtained by reacting a raw material component containing a copolymerizable unsaturated group with another raw material component.
(2) As known from Japanese Patent Publication No. 49-47916, Japanese Examined Patent Publication No. 50-6223, and the like, an unsaturated polyester obtained by obtaining a saturated polyester, which does not have a copolymerizable unsaturated group, and then adding a vinyl-based monomer, which has a functional group and a vinyl group and which is reactive with a functional group such as a hydroxyl group or a carboxyl group present in the saturated polyester, to the saturated polyester.

Examples of the vinyl monomers include compounds having an epoxy group and a vinyl group such as glycidyl methacrylate, compounds having an alkoxysilanol group and a vinyl group such as vinylmethoxysilane, and methacryloxyethyltrimethoxysilane, compounds having an acid anhydride group and a vinyl group such as maleic anhydride, and tetrahydrophthalic anhydride, compounds having an isocyanate group and a vinyl group such as 2-hydroxypropyl methacrylate-hexamethylene diisocyanate adduct, and the like.

The aqueous polyester-based resin (C) preferably contains a carboxyl group in order to enhance the affinity with an aqueous medium. It is possible for the introduction of a carboxyl group into a side chain of a saturated or unsaturated polyester to be easily by a method in which a dioxane compound having a carboxylic acid is reacted with a polyester (Japanese Unexamined patent publication No. 61-228030), a method in which an unsaturated carboxylic acid is radically grafted toapolyester (Japanese Unexamined patent publication No. 62-225510), a method in which a polyester is reacted with halogenoacetic acid to introduce a substituent into an aromatic ring (Japanese Unexamined patent publication No. 62-225527), a method in which a polyester and a polyhydric carboxylic anhydride compound are reacted (Japanese Unexamined patent publication No. 62-240318), or the like.

The carboxyl group of the aqueous polyester-based resin (C) may have a counter ion, and typical examples of such a counter ion include a monovalent ion, preferably an amine-based onium ion containing a hydrogen ion or an ammonium ion.

Examples of the polyurethane-based resin used for the undercoat layer include various types of polyurethane resins, polyurethane polyurea resins, prepolymers thereof, and the like. Specific examples of such urethane resins include reaction products of diisocyanate components such as tolylene diisocyanate, xylene diisocyanate, diphenylmethane diisocyanate, hexamethylene diisocyanate, cyclohexane diisocyanate, isophorone diisocyanate, and dicyclohexyl diisocyanate with diol components such as ethylene glycol, propylene glycol, 1,4-butanediol, 1,6-hexanediol, neopentyl glycol, cyclohexanedimethanol, bisphenol, polyester diol, polyether diol, polycarbonate diol, and polyethylene glycol; reaction products of a urethane prepolymer having an isocyanate group at a terminal with amino compounds, aminosulfonates, polyhydroxycarboxylic acids, bisulfite, and the like; and the like.

Examples of the polyester-based resin used for the undercoat layer include various types of polyester resins and modified products thereof. Specific examples of such a polyester resin include reaction products of polycarboxylic acid components such as terephthalic acid, phthalic acid, isophthalic acid, trimellitic acid, pyromellitic acid, 2-sulfoisophthalic acid, 5-sulfoisophthalic acid, adipic acid, sebacic acid, succinic acid, and dodecanedioic acid with diol components such as ethylene glycol, propylene glycol, 1,4-butanediol, 1,6-hexanediol, neopentyl glycol, cyclohexane dimethanol, and bisphenol. Modified products such as acrylic resin, epoxy resin and the like are also included.

In addition, using a polyurethane-based resin as the undercoat layer is preferable from the viewpoint of the gas barrier property and interlayer adhesiveness, in particular, from the viewpoint of interlayer adhesion between the aluminum oxide layer and the base material layer 101 in a case of having an aluminum oxide layer. Examples thereof include a resin used for PTJC 12 (12 µm aluminum oxide vapor-deposited polyethylene terephthalate film, manufactured by Unitika Ltd.) as a suitable polyurethane-based resin forming the undercoat layer of the gas barrier laminate 100.

The thickness of the undercoat layer is preferably 0.001 µm or more from the viewpoint of obtaining good adhesion, and is preferably 0.5 µm or less from the viewpoint of economy. The thickness is more preferably 0.005 µm to 0.1 µm, and most preferably 0.01 µm to 0.05 µm.

In addition, an adhesive layer may be provided between the base material layer 101 and the gas barrier polymer layer 103. Here, the undercoat layer is excluded from the following adhesive layer.

The adhesive layer is a layer including any known adhesive agent. Examples of the adhesive agent include laminated adhesive agents formed of an organic titanium-based resin, a polyethylene imine-based resin, a urethane-based resin, an epoxy-based resin, an acrylic-based resin, a polyester-based resin, an oxazoline group containing resin, a modified silicone resin, an alkyl titanate, a polyester-based polybutadiene, and the like, or a one-component type or two-component type polyols and polyvalent isocyanates, aqueous urethane, ionomers, and the like. Alternatively, an aqueous adhesive mainly composed of an acrylic-based resin, a vinyl acetate-based resin, a urethane-based resin, a polyester resin, or the like may be used.

In addition, other additives such as a curing agent and a silane coupling agent may be added to the adhesive depending on the application of the gas barrier laminate. In a case where the application of the gas barrier laminate is for hot water treatment such as retorting, a dry lamination adhesive represented by a polyurethane adhesive is preferable from the viewpoint of heat resistance and water resistance, and a solvent type two-component curing type polyurethane adhesive is more preferable.

The warpage of the gas barrier laminate 100 at 23°C is preferably 5 mm or less, and more preferably 3 mm or less. Here, the warpage of the gas barrier laminate 100 is defined as the maximum interval occurring between the gas barrier laminate 100 and the plate when the gas barrier laminate 100 cut out into a 5 cm square is placed on a plate and is measured with a gap gauge.

The gas barrier laminate 100 having a small warpage is excellent in handleability. Further, when laminating the gas barrier laminate 100 on another layer, it is possible to suppress positional deviation from other layers.

The gas barrier laminate 100 of the present embodiment is excellent in gas barrier performance and is able to be suitably used as packaging materials, food packaging materials for contents requiring particularly high gas barrier properties, and various packaging materials for medical applications, industrial applications, common miscellaneous goods applications, and the like.

In addition, the gas barrier laminate 100 of the present embodiment is able to be suitably used as, for example, a film for vacuum heat insulation, which is required to have high barrier performance; a sealing film for sealing an electroluminescence element, a solar cell, or the like; and the like.

Although the embodiments of the present invention were described with reference to the drawings, these are examples of the present invention, and it is also possible to adopt various configurations other than those described above.

### [Examples]

Detailed description will be given below of the present embodiment with reference to examples and comparative examples. Note that, the present embodiment is not at all limited to the description of these examples.

### <Attachment rate of Aluminum Oxide Layer>

The Kα ray of Al in the aluminum oxide film obtained on the film base material was measured using a fluorescent X-ray analyzer (ZSX Primus II manufactured by Rigaku Corporation), and the fluorescent X-ray intensity (A) kcps of the aluminum oxide film was measured. In addition, the fluorescent X-ray intensity (B) kcps was measured for the obtained aluminum film formed of aluminum on the film base material under the same manufacturing conditions as the aluminum oxide film except that oxygen was not introduced. From the obtained value, the attachment rate (A/B) was calculated.

### <Preparation of Solution (Z)>

Purified water was added to a mixture of ammonium polyacrylate (manufactured by Toagosei Co., Ltd., trade name: Aron A-30, 30% by mass aqueous solution, molecular weight: 100,000) to obtain a 10% by mass solution of ammonium polyacrylate aqueous solution.

### <Preparation of Solution (Y)>

Purified water was added to polyethyleneimine (manufactured by Wako Pure Chemical Industries, Ltd., trade name: polyethyleneimine, average molecular weight: approximately 10,000) to obtain a polyethyleneimine aqueous solution in a 10% by mass solution.

### [Comparative Example 1]

A biaxially stretched polyethylene terephthalate film (PET 12 manufactured by Unitika Ltd.) having a thickness of 12 µm was set as a base material and an aluminum oxide film having A/B (attachment rate) of 0.71 was formed by heating and evaporating the aluminum using a high-frequency induction heating method on the corona-treated surface thereof, and performing vapor deposition while introducing oxygen. Due to this, an aluminum oxide vapor-deposited PET film was obtained.

### [Comparative Example 2]

An aluminum oxide vapor-deposited PET film was obtained in the same manner as in Comparative Example 1 except that an aluminum oxide film having A/B (attachment rate) of 0.57 was formed.

### [Comparative Example 3]

On the surface of a corona-treated undercoat layer of a biaxially stretched polyethylene terephthalate film (Unitika Ltd., product number: PTJC 12) having a thickness of 12 µm provided with an undercoat layer whose surface was subjected to a corona treatment, an aluminum oxide film with an A/B (attachment rate) of 0.65 was formed. Due to this, an aluminum oxide vapor-deposited PET film was obtained.

### [Comparative Example 4]

An aluminum oxide vapor-deposited PET film was obtained in the same manner as in Comparative Example 3 except that an aluminum oxide film having A/B (attachment rate) of 0.55 was formed.

### [Comparative Example 5]

Easily adhered PET was obtained by in-line coating of a coating agent mainly including an acrylic component as an easily adhered layer at the time of the film formation of the biaxially stretched polyethylene terephthalate film having a thickness of 12 µm. The coating agent was prepared using "Epocros WS-300" (solid content concentration: 10% by mass) manufactured by Nippon Shokubai Co., Ltd., as the oxazoline group-containing aqueous polymer (A), "Jurymer ET-410" (solid content concentration: 30% by mass) manufactured by Toagosei Co., Ltd., as the aqueous acrylic-based resin (B), and "Polyester WR-961" (solid content concentration: 30% by mass) manufactured by The Nippon Synthetic Chemical Industry Co., Ltd., as the aqueous polyester-based resin (C), such that the solid content ratio (mass ratio) was (A)/(B)/(C)=23.7/57.2/19.1, and coated such that the thickness after drying was 0.06 µm.

An aluminum oxide film having an A/B (attachment rate) of 0.70 was formed on the easy adhesion surface of the obtained easily adhered PET by heating and evaporating the aluminum by a high-frequency induction heating method and performing vapor deposition while introducing oxygen. Due to this, an aluminum oxide vapor-deposited PET film was obtained.

### [Comparative Example 6]

An aluminum oxide vapor-deposited PET film was obtained in the same manner as in Comparative Example 5 except that an aluminum oxide film having A/B (attachment rate) of 0.55 was formed.

### [Example 1]

79 g of the ammonium polyacrylate aqueous solution (Z) and 21 g of the polyethyleneimine aqueous solution (Y) were mixed and stirred to prepare a mixed solution.

Furthermore, purified water was added such that the solid content concentration of the mixed solution described above became 1.0% by mass and stirred until the solution became homogeneous, and then a non-ionic surfactant (polyoxyethylene lauryl ether, manufactured by Kao Corporation, trade name: EMULGEN 120) was mixed therein so as to be 0.3% by mass with respect to the solid content of the mixed solution to prepare a solution (V).

The obtained solution (V) was coated on the vapor-deposited surface of the aluminum oxide-vapor deposited PET film obtained in Comparative Example 1 with an applicator so that the thickness after drying was 0.10 µm, dried using a hot air dryer under the conditions of a temperature of 100°C for a time of 30 seconds, and subjected to a further heating treatment for 15 minutes at 200°C to obtain an amide cross-linked film-laminated film.

### [Example 2]

An amide cross-linked film-laminated film was obtained in the same manner as in Example 1 except that the solution (V) was coated with an applicator such that the thickness after drying was 0.25 µm.

### [Example 3]

An amide cross-linked film-laminated film was obtained in the same manner as in Example 2 except that the solution (V) was coated on the aluminum oxide vapor-deposited PET film obtained in Comparative Example 2.

### [Example 4]

An amide cross-linked film-laminated film was obtained in the same manner as in Example 2 except that the solution (V) was coated on the aluminum oxide vapor-deposited PET film obtained in Comparative Example 3.

### [Example 5]

An amide cross-linked film-laminate film was obtained in the same manner as in Example 2 except that the solution (V) was coated on an aluminum oxide vapor-deposited PET film obtained by forming an aluminum oxide film having an A/B (attachment rate) of 0.70 on the surface of a corona-treated undercoat layer of a biaxially stretched polyethylene terephthalate film having a thickness of 12 µm (product number: PX-53 12, manufactured by Toray Advanced Film Co. , Ltd.) provided with an undercoat layer whose surface is subjected to a corona treatment.

### [Example 6]

An amide cross-linked film-laminated film was obtained in the same manner as in Example 1 except that the solution (V) was coated on the aluminum oxide vapor-deposited PET film obtained in Comparative Example 2.

### [Example 7]

An amide cross-linked film-laminated film was obtained in the same manner as in Example 2 except that the solution (V) was coated on the aluminum oxide vapor-deposited PET film obtained in Comparative Example 4.

### [Example 8]

An amide cross-linked film-laminated film was obtained in the same manner as in Example 2 except that the solution (V) was coated on the aluminum oxide vapor-deposited PET film obtained in Comparative Example 6.

### [Example 9]

An amide cross-linked film-laminated film was obtained in the same manner as in Example 1 except that the solution (V) was coated on the aluminum oxide vapor-deposited PET film obtained in Comparative Example 3.

### [Example 10]

An amide cross-linked film-laminated film was obtained in the same manner as in Example 1 except that the solution (V) was coated on the aluminum oxide vapor-deposited PET film obtained in Comparative Example 5.

### [Example 11]

An amide cross-linked film-laminated film was obtained in the same manner as in Example 1 except that the solution (V) was coated on the aluminum oxide vapor-deposited PET film obtained in Comparative Example 4.

### [Example 12]

An amide cross-linked film-laminated film was obtained in the same manner as in Example 1 except that the solution (V) was coated on the aluminum oxide vapor-deposited PET film obtained in Comparative Example 6.

### [Example 13]

An amide cross-linked film-laminated film was obtained in the same manner as in Example 1 except that an aluminum oxide vapor-deposited PET film formed with an aluminum oxide film with an A/B (attachment rate) of 0.62 was used and the solution (V) was coated with an applicator such that the thickness after drying was 0.42 µm.

### [Example 14]

An amide cross-linked film-laminated film was obtained in the same manner as in Comparative Example 4 except that the solution (V) was coated with an applicator such that the thickness after drying was 0.41 µm.

### [Example 15]

An amide cross-linked film-laminated film was obtained in the same manner as in Example 12 except that the solution (V) was coated with an applicator such that the thickness after drying was 0.40 µm.

### [Comparative Example 7]

An amide cross-linked film-laminated film was obtained in the same manner as in Example 1 except that the solution (V) was coated with an applicator such that the thickness after drying was 0.60 µm.

The aluminum oxide vapor-deposited PET films and the amide cross-linked film-laminated films obtained in the Examples and Comparative Examples were evaluated as follows. The obtained results are shown in Tables 1 and 2.

### <Preparation of Multilayer Film for Evaluating Physical Properties>

(1) An ester-based adhesive agent (12 parts by mass of a polyester-based adhesive agent (trade name: Takelac A310, manufactured by Mitsui Chemicals, Inc.), 1 part by mass of isocyanate curing agent (trade name: Takenate A3, manufactured by Mitsui Chemicals, Inc.), and 7 parts by mass ethyl acetate) was coated on one surface of an unstretched polypropylene film having a thickness of 50 µm (trade name: T.U.X. FCS, manufactured by Mitsui Chemical Tohcello Inc.) . After drying, the deposited surface in the aluminum oxide vapor-deposited PET film obtained in the comparative example and the amide cross-linked film surface in the amide cross-linked film-laminated films obtained in Examples and Comparative Examples were pasted together (dry lamination) and a multilayer film (a sample for measuring physical properties before retorting) was obtained.
(2) 9 parts by mass of an ester-based adhesive agent (polyurethane adhesive agent (trade name: Takelac A 525 S, manufactured by Mitsui Chemicals, Inc.), 1 part by mass of an isocyanate curing agent (trade name: Takenate A 50, manufactured by Mitsui Chemicals, Inc.), and 7.5 parts by mass of ethyl acetate were coated on one surface of a unstretched polypropylene film having a thickness of 70 µm (trade name: RXC-22 manufactured by Mitsui Chemicals, Inc.). After drying, the deposited surface in the aluminum oxide vapor-deposited PET film obtained in the comparative example and the amide cross-linked film surface in the amide cross-linked film-laminated films obtained in Examples and Comparative Examples were pasted together (dry lamination) and a multilayer film (a sample for measuring physical properties after retorting) was obtained.
(3) Retort Treatment
   The multilayer film obtained in (2) above was folded back such that the unstretched polypropylene film became the inner surface and the two sides were heat sealed to form a bag shape, then 70 cc of water was added thereto as the content and the other side was heat sealed to form a bag, which was subjected to a retort treatment under conditions of 130°C for 30 minutes in a high-temperature and high-pressure retort sterilizer. After the retort treatment, the water content was drained to obtain a multilayer film after the retort treatment.
(4) Measurement of Peel Strength
   After collecting the multilayer film obtained by the above method before and after the retort treatment in a width of 15 mm, in order to make a trigger for peeling off the aluminum oxide deposited film and the amide cross-linked film-laminated film, the corners of the sample were partially peeled off between the laminated surface and the unstretched polypropylene film, then, at a peeling speed of 300 (mm/min), the laminate peeling strength at 180° and 90° was measured. The sample after the retort treatment was measured in a wet state.
   Here, in the table, "cut" means that the film breaks because the peeling strength is large.
(5) Oxygen Permeability [ml/(m² day MPa)]
   The multilayer film obtained by the above method was measured according to JIS K 7126 using OX-TRAN 2/21 manufactured by Mocon Inc. under conditions of a temperature of 20°C and a humidity of 90% RH.
(6) Water Vapor Permeability [g/m² day]
   An ester-based adhesive agent (12 parts by mass of a polyester-based adhesive agent (trade name: Takelac A310, manufactured by Mitsui Chemicals, Inc.), 1 part by mass of an isocyanate-based curing agent (trade name: TakenateA3, manufactured by Mitsui Chemicals, Inc.), and 7 parts by mass of ethyl acetate) was coated and dried on one surface of an unstretched polypropylene film having a thickness of 50 µm (trade name: T.U.X. FCS manufactured by Mitsui Chemical Tohcello Inc.) and then the barrier surface of the gas barrier films and the gas barrier layered film obtained in Comparative Examples and Examples were pasted together (dry lamination) to obtain a multilayer film. The obtained multilayer film was overlapped such that the unstretched polypropylene film was the inner surface, the gas barrier laminate film was folded back, the three sides were heat sealed and formed into a bag, then calcium chloride was added as the content, a bag was prepared by heat sealing the last side such that the surface area became 0.01 m², and the bag was allowed to stand for 300 hours under conditions of 40°C and 90% RH, and the water vapor permeability was measured by the difference in weight.
(7) IR Area Ratio
   Measurement of the infrared absorption spectrum (infrared total reflection measurement: the ATR method) was carried out using an IRT-5200 apparatus manufactured by JASCO Corporation on which PKM-GE-S (Germanium) crystals are mounted under conditions of an incident angle of 45°, room temperature, a resolution of 4 cm⁻¹, and an integration number of 100 times. The obtained absorption spectrum was analyzed by the above-described method, and the total peak areas A to D were calculated. Then, area ratios B/A, C/A, and D/A were determined from the total peak areas A to D.
(8) Warpage
   The amount of warpage at 23°C of the aluminum oxide vapor-deposited PET film obtained in the Comparative Examples and the amide cross-linked film-laminated film obtained in Examples and Comparative Examples was determined by cutting the aluminum oxide vapor-deposited PET film and the amide cross-linked film-laminated film into 5 cm squares, placing the squares on a plate with the base material layer side facing downward while pressing the corners, and then measuring the largest gap generated between the film and the plate with a gap gauge. A sample having a warpage of 5 mm or less was evaluated as "O", and a sample having a warpage exceeding 5 mm as "X".

**Table 1**

| | Base material layer | Presence or absence of undercoat layer | Oxygen introduction amount [sccm] | Attachment rate | Thickness of aluminum oxide layer [nm] | Thickness of amide cross-linking film layer [µm] | IR area ratio B/A [-] | IR area ratio C/A [-] | IR area ratio D/A [-] | The number of moles of -COO- group included in polycarboxylic acid/the number of moles of amino groups included in polyamine compound |
|---|---|---|---|---|---|---|---|---|---|---|
| Comparative Example 1 | PET | Absent | 195 | 0.71 | 8.0 | - | - | - | - | - |
| Comparative Example 2 | PET | Absent | 289 | 0.57 | 13.0 | - | - | - | - | - |
| Comparative Example 3 | PET | Present | 195 | 0.65 | 7.2 | - | - | - | - | - |
| Comparative Example 4 | PET | Present | 295 | 0.55 | 6.1 | - | - | - | - | - |
| Comparative Example 5 | PET | Present | 196 | 0.70 | 7.4 | - | - | - | - | - |
| Comparative Example 6 | PET | Present | 294 | 0.55 | 5.8 | - | - | - | - | - |
| Example 1 | PET | Absent | 195 | 0.71 | 8.0 | 0.10 | 0.587 | 0.137 | 0.276 | 100/55 |
| Example 2 | PET | Absent | 195 | 0.71 | 8.0 | 0.25 | 0.558 | 0.185 | 0.257 | 100/55 |
| Example 3 | PET | Absent | 289 | 0.57 | 13.0 | 0.25 | 0.578 | 0.195 | 0.227 | 100/55 |
| Example 4 | PET | Present | 195 | 0.65 | 7.2 | 0.25 | 0.562 | 0.200 | 0.238 | 100/55 |
| Example 5 | PET | Present | 197 | 0.70 | 7.8 | 0.25 | 0.558 | 0.218 | 0.224 | 100/55 |
| Example 6 | PET | Absent | 289 | 0.57 | 13.0 | 0.10 | 0.629 | 0.131 | 0.240 | 100/55 |
| Example 7 | PET | Present | 295 | 0.55 | 6.1 | 0.25 | 0.563 | 0.217 | 0.220 | 100/55 |
| Example 8 | PET | Present | 294 | 0.55 | 5.8 | 0.25 | 0.516 | 0.285 | 0.199 | 100/55 |
| Example 9 | PET | Present | 195 | 0.65 | 7.2 | 0.10 | 0.646 | 0.083 | 0.271 | 100/55 |
| Example 10 | PET | Present | 196 | 0.70 | 7.4 | 0.10 | 0.508 | 0.311 | 0.180 | 100/55 |
| Example 11 | PET | Present | 295 | 0.55 | 6.1 | 0.10 | 0.647 | 0.092 | 0.261 | 100/55 |
| Example 12 | PET | Present | 294 | 0.55 | 5.8 | 0.10 | 0.534 | 0.277 | 0.189 | 100/55 |
| Example 13 | PET | Absent | 245 | 0.62 | 7.4 | 0.42 | 0.500 | 0.262 | 0.237 | 100/55 |
| Example 14 | PET | Present | 295 | 0.55 | 6.1 | 0.41 | 0.510 | 0.256 | 0.234 | 100/55 |
| Example 15 | PET | Present | 294 | 0.55 | 6.0 | 0.40 | 0.470 | 0.305 | 0.225 | 100/55 |
| Comparative Example 7 | PET | Absent | 195 | 0.71 | 6.0 | 0.60 | 0.457 | 0.311 | 0.232 | 100/55 |

**Table 2**

| | Before retort treatment | | After 130°C, 30 minute retort treatment | | Before retort treatment | | After 130°, 30 minute retort treatment | | Warping |
|---|---|---|---|---|---|---|---|---|---|
| | Peeling strength [N/15 mm] | | Peeling strength [N/15 mm] | | Oxygen permeability | Moisture permeability | Oxygen permeability | Water vapor permeability | |
| | 180° | 90° | 180° | 90° | ml/m²/d/MPa | g/m²/d | ml/m²/d/MPa | g/m²/d | |
| Comparative Example 1 | 6.0 | 5.8 | 0.4 | 2.4 | 10.1 | 0.92 | 15.2 | 1.57 | ○ |
| Comparative Example 2 | 5.8 | Cut | 0.8 | 3.9 | 7.3 | 1.75 | 11.5 | 1.33 | ○ |
| Comparative Example 3 | 1.1 | 3.2 | 0.4 | 0.2 | 18.4 | 1.76 | 71.6 | 5.57 | ○ |
| Comparative Example 4 | Cut | Cut | 3.2 | 3.5 | 24.9 | 2.82 | 719.1 | 5.62 | ○ |
| Comparative Example 5 | 6.0 | 6.5 | 1.8 | 2.1 | 5.8 | 0.52 | 46.2 | 2.14 | O |
| Comparative Example 6 | 6.3 | 7.3 | 4.0 | Cut | 7.4 | 1.50 | 30.4 | 1.51 | ○ |
| Example 1 | 4.3 | Cut | 0.1 | 0.2 | 5.0 | 1.04 | 4.9 | 2.23 | ○ |
| Example 2 | 0.9 | 0.9 | 0.1 | 0.2 | 0.6 | 0.33 | 1.1 | 2.84 | ○ |
| Example 3 | 0.7 | 0.9 | 0.3 | 0.3 | 0.3 | 0.33 | 0.4 | 1.27 | ○ |
| Example 4 | 1.1 | 3.2 | 0.4 | 0.2 | 2.1 | 0.89 | 3.7 | 4.66 | ○ |
| Example 5 | 0.7 | 0.8 | 0.1 | 0.1 | 1.2 | 0.40 | 0.8 | 2.32 | ○ |
| Example 6 | 4.4 | Cut | 0.3 | 1.1 | 0.3 | 0.33 | 0.4 | 1.87 | ○ |
| Example 7 | Cut | Cut | 0.6 | 0.6 | 1.9 | 0.65 | 2.5 | 4.18 | ○ |
| Example 8 | Cut | Cut | 0.2 | 0.1 | 0.8 | 0.26 | 0.5 | 1.59 | ○ |
| Example 9 | 6.9 | Cut | 0.3 | 0.2 | 4.7 | 1.52 | 10.5 | 3.8 | ○ |
| Example 10 | 6.7 | Cut | 0.3 | 0.2 | 2.8 | 0.44 | 6.3 | 1.7 | ○ |
| Example 11 | 3.4 | 3.5 | 3.7 | 2.1 | 9.5 | 0.84 | 9.4 | 4.46 | ○ |
| Example 12 | Cut | Cut | 2.4 | 3.1 | 6.1 | 0.41 | 4.7 | 1.19 | ○ |
| Example 13 | 0.7 | 0.8 | 0.2 | 0.1 | 0.7 | 0.52 | 1.1 | 1.79 | ○ |
| Example 14 | 0.9 | 1.1 | 0.4 | 0.1 | 0.5 | 0.42 | 0.4 | 2.36 | ○ |
| Example 15 | 8.3 | 8.1 | 0.8 | 1.7 | 0.4 | 0.21 | 0.5 | 1.42 | ○ |
| Comparative Example 7 | 0.3 | 0.3 | 0.1 | 0.1 | 0.3 | 0.32 | 0.7 | 1.61 | X |

The amide cross-linked film-laminated film obtained in the Examples was excellent in the balance of adhesion and dimensional stability while being excellent in gas barrier performance under the conditions of both high humidity and after a boil and retort treatment.

This application claims priority based on Japanese Patent Application No. 2015-101341 filed on May 18, 2015, the disclosure of which is incorporated herein in its entirety.

## Claims

1. A gas barrier laminate comprising:
a base material layer; and
a gas barrier polymer layer having a thickness of from 0.01 µm to 0.45 µm provided over at least one surface of the base material layer and formed by heating a mixture including a polycarboxylic acid and a polyamine compound.

2. The gas barrier laminate according to claim 1, further comprising:
an undercoat layer between the base material layer and the gas barrier polymer layer,
wherein the undercoat layer is formed of one type or two or more types selected from a polyurethane-based resin, a polyester-based resin, an oxazoline-based resin, and an acrylic-based resin.

3. The gas barrier laminate according to claim 1 or 2, further comprising:
an inorganic material layer between the base material layer and the gas barrier polymer layer.

4. The gas barrier laminate according to claim 3,
wherein the inorganic material layer is formed of one type or two or more types of inorganic materials selected from the group consisting of silicon oxide, aluminum oxide, and aluminum.

5. The gas barrier laminate according to claim 4,
wherein the inorganic material layer is an aluminum oxide layer formed of aluminum oxide.

6. The gas barrier laminate according to claim 5,
wherein, when a Kα ray intensity of aluminum obtained by fluorescent X-ray analysis of the aluminum oxide layer is defined as A, and
a Kα ray intensity of aluminum obtained by fluorescent X-ray analysis of an aluminum layer formed of aluminum and obtained under the same manufacturing conditions as the aluminum oxide layer except that oxygen is not introduced is defined as B,
A/B is equal to or more than 0.50 to equal to or less than 0.75.

7. The gas barrier laminate according to any one of claims 1 to 6,
wherein (the number of moles of -COO- groups included in the polycarboxylic acid in the mixture)/(the number of moles of amino groups included in the polyamine compound in the mixture) is more than 100/22 and 100/99 or less.

8. The gas barrier laminate according to any one of claims 1 to 7,
wherein the polycarboxylic acid is one type or two or more types of polymers selected from polyacrylic acid, polymethacrylic acid, and a copolymer of acrylic acid and methacrylic acid.

9. The gas barrier laminate according to any one of claims 1 to 8,
wherein, in an infrared absorption spectrum of the gas barrier polymer layer, when a total peak area in a range of an absorption band of equal to or more than 1493 cm⁻¹ and equal to or less than 1780 cm⁻¹ is A, and a total peak area in a range of an absorption band of equal to or more than 1598 cm⁻¹ and equal to or less than 1690 cm⁻¹ is B, an area ratio of an amide bond indicated by B/A is 0.370 or more.

10. The gas barrier laminate according to claim 9,
wherein, in the infrared absorption spectrum, when a total peak area in a range of an absorption band of equal to or more than 1690 cm⁻¹ and equal to or less than 1780 cm⁻¹ is C, an area ratio of a carboxylic acid indicated by C/A is 0.500 or less.

11. The gas barrier laminate according to claim 9 or 10,
wherein, in the infrared absorption spectrum, when a total peak area in a range of an absorption band of equal to or more than 1493 cm⁻¹ and equal to or less than 1598 cm⁻¹ is D, an area ratio of a carboxylate indicated by D/A is 0.450 or less.
